# EUROPÄISCHE PATENTSCHRIFT

(11) **EP 4 316 936 B1**
(45) Veröffentlichungstag und Bekanntmachung des Hinweises auf die Patenterteilung: **26.02.2025**
(21) Anmeldenummer: 23186100.6
(22) Anmeldetag: 18.07.2023
(51) Int. Cl.: B60W 30/18, B60W 30/095, B60W 50/06, G01S 15/931, G01S 7/53

(54) **VERFAHREN ZUM BETRIEB EINES FAHRERASSISTENZSYSTEMS FÜR EINEN ASSISTIERTEN SPUR-WECHSELVORGANG EINES KRAFTFAHRZEUGS**
METHOD FOR OPERATING A DRIVER ASSISTANCE SYSTEM FOR AN ASSISTED LANE CHANGE PROCEDURE OF A MOTOR VEHICLE
PROCÉDÉ DE FONCTIONNEMENT D'UN SYSTÈME D'ASSISTANCE AU CONDUCTEUR POUR UN PROCÉDÉ DE CHANGEMENT DE VOIE ASSISTÉ D'UN VÉHICULE AUTOMOBILE

(30) Priorität: 01.08.2022 DE 102022207902
(43) Veröffentlichungstag der Anmeldung: 07.02.2024
(73) Patentinhaber: Volkswagen Aktiengesellschaft, 38440 Wolfsburg (DE)
(72) Erfinder: Hoppe, Jannis, 38100 Braunschweig (DE); Münning, Daniel, 38124 Braunschweig (DE)

(56) Entgegenhaltungen:
- DE-A1- 102015 200 020
- DE-A1- 102019 006 243
- DE-A1- 102019 217 428
- DE-A1- 102019 219 435
- US-A1- 2018 086 338
- US-A1- 2019 176 832
- US-A1- 2021 107 488

## Beschreibung

Die Erfindung betrifft ein Verfahren zum Betrieb eines Fahrerassistenzsystems für einen assistierten Spurwechselvorgang eines Kraftfahrzeugs von einer Ausgangsspur zu einer benachbarten Zielspur, aufweisend mindestens einen Umgebungssensor zur Erfassung von Objekten in einer Umgebung des Kraftfahrzeugs, und mindestens eine Karteneinheit zur Erfassung von Kartendaten über den Fahrspurverlauf. Die Erfindung betrifft weiterhin ein Fahrerassistenzsystem und ein Kraftfahrzeug sowie eine Software zur Durchführung des Verfahrens.

Kraftfahrzeuge sind heutzutage regelmäßig mit verschiedenen Fahrerassistenzsystemen ausgestattet, welche einen Fahrer beim Fahren des Kraftfahrzeugs unterstützen. Solche Fahrerassistenzsysteme erfassen und werten insbesondere die Kraftfahrzeugumgebung aus, um gefährliche Situationen, insbesondere Kollisionsgefahren, frühzeitig zu erkennen und den Fahrer bei seinen Fahrmanövern zu unterstützen oder vollständig zu vermeiden.

Unter einem Fahrerassistenzsystem wird hier und im Folgenden insbesondere eine Vorrichtung eines Kraftfahrzeugs verstanden, welche den Fahrer beim Fahren des Kraftfahrzeugs unterstützt. Derartige Fahrerassistenzsysteme können sowohl als reine Informationssysteme, welche dem Fahrer unterstützende Informationen (bspw. Richtungspfeile auf einer Anzeige/Display) anzeigen, als auch Fahrsysteme, welche automatisch die Fortbewegung des Kraftahrzeugs (bspw. Lenkung und/oder Beschleunigung) beeinflussen, ausgeführt sein.

Ein Spurwechselassistenzsystem ist ein Fahrerassistenzsystem, welches den Fahrer bei einem Spurwechselvorgang unterstützt oder assistiert. Unter einem Spurwechselvorgang, auch Spurwechselprozedur (engl.: Lane Change Procedure) genannt, ist hier und im Folgenden insbesondere ein Fahrspurwechsel (Fahrstreifenwechsel, Fahrbahnwechsel) des Kraftfahrzeugs von einer Ausgangsspur (Egospur) auf eine benachbarte Zielspur (Nachbarspur) auf einer mindestens zweispurigen Fahrbahn zu verstehen. Die Fahrspuren der Fahrbahn sind hierbei in der Regel durch Straßenlinien oder -streifen (Leitlinien, Fahrstreifenbegrenzung, Fahrbahnbegrenzung etc.) beidseitig begrenzt, mit anderen Worten sind die Ausgangsspur und die Zielspur durch eine Straßenlinie voneinander getrennt, welche im Zuge des Spurwechselvorgangs von dem Kraftfahrzeug gekreuzt oder überquert wird.

US 2018/086338 A1 offenbart ein Verfahren zum Betrieb eines Fahrerassistenzsystems für einen assistierten Spurwechselvorgang eines Kraftfahrzeugs von einer Ausgangsspur zu einer benachbarten Zielspur, aufweisend mindestens einen Umgebungssensor zur Erfassung von Objekten in einer Umgebung des Kraftfahrzeugs, und mindestens eine Karteneinheit zur Erfassung von Kartendaten über den Fahrspurverlauf.

Der Spurwechselvorgang wird beispielsweise durch ein Auslösen oder Aktivieren des Kraftfahrzeugblinkers gestartet. Anschließend wird das Kraftfahrzeug in Richtung der zwischen Ausgangsspur und Zielspur befindlichen Straßenlinie bewegt. Wenn das Kraftfahrzeug die Straßenlinie erreicht erfolgt das sogenannte Spurwechselmanöver (engl.: Lane Change Manoeuvre), bei welchem das Kraftfahrzeug die Ausgangsspur verlässt, die Straßenlinie kreuzt und vollständig auf die Zielspur bewegt wird. Im Anschluss an das Spurwechselmanöver wird das Kraftfahrzeug eingelenkt, so dass es sich im Wesentlichen entlang der Zielspur fortbewegt. Am Ende des Einlenkens wird der Kraftfahrzeugblinker beispielsweise automatisch deaktiviert und der Spurwechselvorgang beendet.

Spurwechselassistenzsysteme sind beispielsweise erst ab einer vorgegebenen Mindest-Fahrzeuggeschwindigkeit (beispielsweise ab 90 km/h) aktivierbar, wobei eine Fahrzeugsensorik die Fahrzeugumgebung überwacht. Ein Spurwechsel wird hierbei lediglich assistiert, wenn er sicher ausgeführt werden kann. Wenn das Spurwechselassistenzsystem aktiviert ist, kann der Spurwechsel beispielsweise durch Tippblinken (Komfortblinken) begonnen und ausgeführt werden. Voraussetzung ist, dass die Fahrzeugsensorik in einem sicherheitskritischen Bereich keine Objekte erkannt hat. Zusätzlich wird beispielsweise mit einem kapazitiven Berührungssensor überwacht, dass sich die Hände des Fahrers am Lenkrad befinden. Das Kraftfahrzeug lenkt dann beispielsweise selbstständig in die gewünschte (Fahr-)Spur. Der Fahrer kann jedoch jederzeit eingreifen und das Manöver übernehmen.

In einem assistierten Fahrstreifenwechsel wird als Fahrsensorik beispielsweise sowohl eine Fahrzeugkamera als auch Radar- und Ultraschallsensoren zur Überwachung der Fahrzeugumgebung verwendet. Sobald zum Beispiel die Ultraschallsensoren ein Objekt auf der Zielspur des Spurwechsels im sicherheitskritischen Bereich erkennen wird der Spurwechsel abgebrochen, oder die Freigabe für den Spurwechsel entzogen.

Insbesondere die Ultraschallsensoren sind hierbei als Nahfeldsensoren ausgebildet, welche in der Regel für die Assistenz von Parkmanövern ausgeführt sind. Dies bedeutet, dass die Ultraschallsensoren hinsichtlich ihrer Sensitivität insbesondere für niedrige Fahrzeuggeschwindigkeiten ausgelegt oder konfiguriert sind. Aufgrund dieser Sensititivitätseinstellung kann es bei höheren Fahrzeuggeschwindigkeiten vorkommen, dass die Ultraschallsensoren Phantomobjekte oder Störobjekte erfassen, welche für den Spurwechselvorgang unkritisch sind, jedoch zu vermehrten unplausiblen Spurwechselabbrüchen führen können.

Um derartige ungewünschte Spurwechselabbrüche zu vermeiden ist es beispielsweise möglich, die Ultraschallsensordaten zu plausibilisieren. Eine Plausibilisierung der Ultraschallsensordaten mit Daten anderer Umgebungssensoren (Kamera/Radar) ist jedoch vergleichsweise zeitintensiv. Beispielsweise beträgt die typische Zeitdauer für ein Spurwechselmanöver lediglich bis zu 5 s (Sekunden), so dass lediglich eine sehr eingeschränkte Zeitdauer für eine Plausibilisierung der Ultraschallsensordaten bereitsteht.

Eine andere Möglichkeit besteht beispielsweise darin, die während des Spurwechsels erfassten Ultraschallobjekte zu ignorieren, sobald sich das Kraftahrzeug in der Zielspur während des Spurwechselmanövers befindet. Dies kann jedoch zu sicherheitskritischen Problemen führen, beispielsweise bei einem Fahrspurwechsel auf einer dreispurigen Fahrbahn von der rechten Fahrspur auf die mittlere Fahrspur. Wenn in diesem Szenario ein weiteres Kraftahrzeug aus der linken Fahrspur ebenfalls in die Zielspur fährt, würde der Spurwechsel nicht mehr abgebrochen werden, da die Ultraschallobjekte für diesen Zeitraum (wenige Sekunden) nicht ausgewertet oder berücksichtigt werden.

Der Erfindung liegt die Aufgabe zugrunde, ein besonders geeignetes Verfahren zum Betrieb eines Fahrerassistenzsystems für einen assistierten Spurwechselvorgang eines Kraftfahrzeugs von einer Ausgangsspur zu einer benachbarten Zielspur anzugeben. Insbesondere sollen Daten eines Umgebungssensors während des Spurwechselvorgangs ausgewertet werden, ohne eine generelle negative Funktionsbeeinflussung zu bewirken. Der Erfindung liegt weiterhin die Aufgabe zugrunde, ein besonders geeignetes Fahrerassistenzsystem und ein besonders geeignetes Kraftfahrzeug sowie eine besonders geeignete Software auf einem Datenträger anzugeben.

Hinsichtlich des Verfahrens wird die Aufgabe mit den Merkmalen des Anspruchs 1 und hinsichtlich des Fahrerassistenzsystems mit den Merkmalen des Anspruchs 10 sowie hinsichtlich des Kraftfahrzeugs mit den Merkmalen des Anspruchs 11 und hinsichtlich der Software mit den Merkmalen des Anspruchs 12 erfindungsgemäß gelöst. Vorteilhafte Ausgestaltungen und Weiterbildungen sind Gegenstand der Unteransprüche. Die im Hinblick auf das Verfahren angeführten Vorteile und Ausgestaltungen sind sinngemäß auch auf das Fahrerassistenzsystem und/oder das Kraftfahrzeug und/oder die Software übertragbar und umgekehrt.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Sofern nachfolgend Verfahrensschritte beschrieben werden, ergeben sich vorteilhafte Ausgestaltungen für das Fahrerassistenzsystem und/oder das Kraftfahrzeug und/oder die Software insbesondere dadurch, dass diese ausgebildet sind, einen oder mehrere dieser Verfahrensschritte auszuführen.

Das erfindungsgemäße Verfahren ist zum Betrieb eines Fahrerassistenzsystems, insbesondere eines Spurwechselassistenzsystems, eines Kraftfahrzeugs vorgesehen sowie dafür geeignet und ausgestaltet. Das Verfahren ist hierbei insbesondere zur Durchführung eines assistierten Spurwechselvorgangs (Spurwechselprozedur) auf einer mehrspurigen, insbesondere mindestens zweispurigen, Fahrbahn von einer Ausgangsspur (Egospur) zu einer benachbarten Zielspur (Nachbarspur) ausgeführt. Das Fahrerassistenzsystem weist hierbei mindestens einen Umgebungssensor zur Erfassung von Objekten in einer Umgebung des Kraftfahrzeugs auf. Unter einem Umgebungssensor ist hierbei insbesondere ein nicht-optischer Nahfeldsensor, vorzugsweise ein Ultraschallsensor, zu verstehen. Das Fahrerassistenzsystem weist weiterhin mindestens eine Karteneinheit zur Erfassung von Kartendaten über den Fahrspurverlauf der Fahrbahn auf. Unter Kartendaten werden somit insbesondere (Fahr-)Spurdaten verstanden.

Während des Betriebs wird anhand der Kartendaten eine aktuelle Fahrzeugposition bestimmt. Mit anderen Worten wird eine Position in den Kartendaten bestimmt, welche im Wesentlichen der Fahrzeugposition des Kraftfahrzeugs auf der Fahrbahn entspricht. Ein Fahrzeugnutzer (Fahrer) kann einen Spurwechselvorgang beispielsweise durch Aktivierung eines Fahrzeugblinkers, insbesondere mittels Tippblinken, aktivieren oder auslösen, wenn eine Fahrzeuggeschwindigkeit größer als eine hinterlegte Mindestgeschwindigkeit (beispielsweise größer 90 km/h) ist.

Wenn ein Spurwechselvorgang aktiviert wird, wird zunächst eine Spurwechselstrecke für den Spurwechselvorgang prognostiziert oder geschätzt. Die Spurwechselstrecke ist hierbei diejenige Strecke, welche das Kraftfahrzeug während des Spurwechselvorgangs voraussichtlich fährt. Die Spurwechselstrecke ist also diejenige Strecke, welche zwischen dem Aktivieren und Deaktivieren des Fahrzeugblinkers von dem Kraftfahrzeug voraussichtlich gefahren wird. Mit anderen Worten entspricht die Spurwechselstrecke dem prognostizierten Verlauf der Fahrzeugposition.

Unter "Prognose" oder "prognostizieren" ist hier und im Folgenden insbesondere eine vorausschauende Abschätzung, also eine Prädiktion, zu verstehen, bei welcher anhand eines aktuellen und/oder vergangenen Fahrzeugzustands (Fahrzeugposition, Fahrzeuggeschwindigkeit, ...) - gegebenenfalls unter Hinzunahme von mathematischen oder physikalischen Modellen - eine zukünftiger oder zu erwartende Fahrzeugstrecke berechnet oder prädiziert wird, welche mit einer hinreichenden Wahrscheinlichkeit auftritt. Welche Wahrscheinlichkeit hierbei als hinreichend gilt und wie groß die Wahrscheinlichkeit konkret ist, ist dabei zunächst nebensächlich. Dies lässt sich beispielsweise aus vergangenen Fahrdaten oder aus entsprechenden Versuchen oder Erprobungen ermitteln. Für unterschiedliche Kraftfahrzeuge, Betriebs- und Umgebungsbedingungen (Tageszeit, Witterung, Wetterbedingungen etc.) oder Anwendungsszenarien ergeben sich unter Umständen unterschiedliche prognostizierte Spurwechselstrecken.

Für die prognostizierte Spurwechselstrecke wird anschließend ein Wahrscheinlichkeitsmaß für einen Spurwechsel eines weiteren Verkehrsteilnehmers, insbesondere eines weiteren Kraftfahrzeugs, auf die Zielspur bestimmt. Das Wahrscheinlichkeitsmaß ist also ein Maß für die Wahrscheinlichkeit, dass ein weiterer Verkehrsteilnehmer während des Spurwechselvorgangs auf die Zielspur wechselt. Mit anderen Worten wird im Wesentlichen eine Kollisionsgefahr mit einem anderen Verkehrsteilnehmer während des Spurwechselvorgangs bestimmt. Es wird also bestimmt, wie hoch die Wahrscheinlichkeit ist, dass ein für den Spurwechselvorgang relevantes Objekt von dem Umgebungssensor erfasst werden kann. Das Wahrscheinlichkeitsmaß wird hierbei beispielsweise geschätzt oder prognostiziert.

Erfindungsgemäß wird eine Sensitivität des Umgebungssensors zur Erkennung von Objekten in Abhängigkeit des Wahrscheinlichkeitsmaßes eingestellt. Beispielsweise wird die Sensitivität reduziert, wenn das Wahrscheinlichkeitsmaß niedrig ist, und die Sensitivität erhöht, wenn das Wahrscheinlichkeitsmaß hoch ist. Die Beurteilung des Wahrscheinlichkeitsmaßes erfolgt beispielsweiser anhand eines geeigneten Schwellwertvergleichs.

Unter der "(Sensor-)Sensitivität" des Umgebungssensors ist hier und im Folgenden insbesondere das Ansprechvermögen oder das Auslöseverhalten, also beispielsweise die (Sensor-)Empfindlichkeit zu verstehen. Der Sensitivität charakterisiert hierbei beispielsweise eine (Ansprech-)Schwelle bei der Auswertung des Umgebungssensors, ab welcher ein Sensorsignal als ein (Stör-)Objekt klassifiziert wird oder nicht.

Verfahrensgemäß wird die Umgebung während des Spurwechselvorgangs, also bei der Fahrt entlang der Spurwechselstrecke, kontinuierlich von dem Umgebungssensor überwacht, wobei der Spurwechselvorgang abgebrochen wird, wenn ein Objekt von dem Umgebungssensor erfasst wird. Insbesondere wird der Umgebungssensor während der gesamten Spurwechselprozedur ausgewertet, also sowohl in der Ausgangsspur als auch in der Zielspur. Dadurch ist ein besonders geeignetes Verfahren zum Betrieb eines Fahrerassistenzsystems realisiert. Insbesondere wird durch die wahrscheinlichkeitsmaßabhängige Einstellung der Sensorsensitivität die Robustheit eines assistierten Fahrspurwechsels verbessert, indem die Sensorsensitivität an die jeweilige Situation angepasst wird. Somit wird die Anzahl der falsch erkannten Phantom- oder Störobjekte reduziert, so dass der Spurwechselvorgang weniger oft unplausibel abgebrochen wird.

In einer vorteilhaften Ausführung werden als Kartendaten Navigationsdaten eines fahrzeuginternen Navigationsgeräts und/oder Schwarmdaten (Flottendaten) aus einer Datenwolke (Cloud) verwendet. Die Karteneinheit umfasst somit beispielsweise das Navigationsgerät und/oder ein Empfangsgerät für die Schwarmdaten.

Die Schwarmdaten sind hierbei Karten- beziehungsweise Spurdaten, welche durch mehrere Quellen (dem Schwarm) erzeugt werden. Die Schwarmdaten werden hierbei insbesondere via Crowdsourcing durch eine Vielzahl von Kraftfahrzeugen (Flotten-/Schwarmfahrzeugen) erstellt. Beispielsweise erfassen die am Schwarm beteiligten Kraftfahrzeuge durch optische Sensorsysteme Fahrbahnmarkierungen und/oder Straßeninformationen, welche komprimiert in die Datenwolke fließen. Durch die Verwendung von Schwarmdaten ist im Wesentlichen eine Echtzeitaktualisierung der bereitgestellten Spurdaten ermöglicht, so dass das Verfahren auch während der Fahrt dynamisch und flexibel an unterschiedliche Situationen (Baustellen etc.) angepasst werden kann.

In einer zweckmäßigen Weiterbildung wird das Wahrscheinlichkeitsmaß anhand der Kartendaten bestimmt. Mit anderen Worten werden die Kartendaten hinsichtlich Merkmalen ausgewertet, welche für das Wahrscheinlichkeitsmaß relevant sind, und anschließend wird aus den erfassten Merkmalen das Wahrscheinlichkeitsmaß bestimmt. Dadurch ist eine zweckmäßige und zuverlässige Bestimmung des Wahrscheinlichkeitsmaßes realisiert.

In einer bevorzugten Anwendung wird als Merkmal eine bevorstehende Fahrspurreduzierung verwendet. Mit anderen Worten werden die Kartendaten zur Bestimmung des Wahrscheinlichkeitsmaßes auf eine Fahrspurreduzierung (Fahrbahnreduzierung) untersucht. Unter einer Fahrspurreduzierung ist hierbei insbesondere ein Zusammenführen oder Vereinen von zwei benachbarten Fahrspuren zu einer einzigen Fahrspur zu verstehen. Insbesondere werden die Kartendaten hierbei auf solche Fahrspurreduzierungen untersucht, bei welcher die Fahrspuren zu oder mit der Zielspur vereinigt oder zusammengeführt werden. Vorzugsweise werden die Kartendaten auf Fahrspurreduzierungen untersucht, bei welchen eine benachbart zur Zielspur angeordnete Fahrspur, welche nicht die Ausgangsspur ist, mit der Zielspur vereinigt oder zusammengeführt wird. Dadurch ist eine besonders vorteilhafte Bestimmung des Wahrscheinlichkeitsmaßes realisiert, da im Bereich derartiger Fahrspurreduzierungen die Wahrscheinlichkeit besonders hoch ist, dass während des Spurwechselvorgangs ein weiteres Kraftfahrzeug auf die Zielspur wechselt.

In einer zweckmäßigen Ausgestaltung wird eine Fahrspurreduzierung insbesondere anhand der Schwarmdaten identifiziert, bestimmt, oder lokalisiert. Die Schwarmdaten umfassen beispielsweise Fahrstreckendaten der Schwarmfahrzeuge, welche den gefahrenen Pfaden der Schwarmfahrzeuge (Drivable Path), entsprechen. Die Fahrstreckendaten entsprechen also dem gemittelten oder durchschnittlichen Fahrweg auf der Fahrbahn. Kreuzen oder schneiden sich zwei solche Fahrwege in einem Schnittpunkt, und verlaufen danach im Wesentlichen als ein Fahrweg weiter, so ist dies ein zuverlässiger Indikator auf das Vorhandensein einer Fahrspurreduzierung. Zur Berücksichtigung von Schwankungen und Abweichungen wird hierbei für den Vergleich mit der Spurwechselstrecke nicht der Schnittpunkt, sondern ein um den Schnittpunkt lokalisierter Positionsbereich verwendet. Es wird also während des Verfahrens geprüft, ob sich der Positionsbereich mit der Spurwechselstrecke überschneidet. Wenn ja, liegt ein erhöhtes Wahrscheinlichkeitsmaß vor.

In einer denkbaren Ausführung ist der Positionsbereich von einer Untergrenze und von einer Obergrenze begrenzt. Die Untergrenze ist durch eine Differenz des Schnittpunkts mit einem hinterlegten unteren Schwellwert, und die Obergrenze durch eine Summe des Schnittpunkts mit einem hinterlegten oberen Schwellwert bestimmt. Die hinterlegten Schwellwerte sind hierbei beispielsweise anhand von gesetzlichen Regelungen oder anhand von vorcharakterisierten Messungen vorgegeben und in einem Speicher hinterlegt. Die Schwellwerte werden also während des Verfahrens vorzugsweise nicht verändert, und sind somit für jeden assistierten Spurwechselvorgang identisch. Die Schwellwerte können beispielsweise auch mittels Updates der Sensor-Hardware und/oder Sensor-Software angepasst werden.

Ein zusätzlicher oder weiterer Aspekt der Erfindung sieht vor, dass die Sensitivität des Umgebungssensors zusätzlich zu dem Wahrscheinlichkeitsmaß auch in Abhängigkeit einer (aktuellen) Fahrsituation verändert wird. Unter einer Fahrsituation ist hierbei eine die Fahrt des Kraftfahrzeugs charakterisierende Situation zu verstehen, welche beispielsweise vom Fahrzeugzustand des Kraftfahrzeugs (z.B. Fahrzeuggeschwindigkeit, Drehmoment/Beschleunigung, ...) und/oder dem Fahrbahnzustand der Fahrbahn (z.B. nass, gefroren, Schlaglöcher, ...) und/oder einem Umgebungszustand der Fahrzeugumgebung (z.B. Wetterverhältnisse, Tageszeit, ...) abhängig ist. Dadurch wird die Betriebssicherheit des Verfahrens verbessert. In einer bevorzugten Ausbildung werden zur Charakterisierung der Fahrsituation Wetterdaten und/oder eine Fahrzeuggeschwindigkeit des Kraftfahrzeugs ausgewertet. Insbesondere bei als Ultraschallsensoren ausgeführte Umgebungssensoren sind die Fahrzeuggeschwindigkeit und die Wetterverhältnisse relevante Größen, welche Einfluss auf das Auftreten von Phantomobjekten haben. Beispielsweise treten bei Schneefall häufiger ungewünschte Reflexionen der Ultraschallsignale auf, welche als Phantomobjekten erfasst werden. Somit kann bei Schneefall die Sensitivität der Ultraschallsensoren beispielsweise reduziert werden, um die Anzahl der unplausiblen Spurwechselabbrüche zu reduzieren.

In einer besonders geeigneten Weiterbildung werden die Kartendaten zur Bestimmung der aktuellen Fahrzeugposition mit den Daten einer Fahrzeugkamera verglichen. Dadurch wird die Positionsgenauigkeit bei der Bestimmung der Fahrzeugposition wesentlich verbessert, so dass ein besonders sicherer und zuverlässiger Spurwechselvorgang ermöglicht ist.

Beispielsweise wird die initiale Verortung über eine GPS- Position (GPS: Global Positioning System) in den Kartendaten bestimmt. Die GPS-Position weist hierbei eine Positionsungenauigkeit von beispielsweise 2 m (Meter) bis 15 m auf. Durch die Fahrzeugkamera werden Landmarken in der Fahrzeugumgebung, sogenannte Live Features, wie beispielsweise Schilder, Ampeln, Fahrbahnstreifen etc., erfasst. Die erfassten Landmarken werden mit korrespondierenden hinterlegten Landmarken in den Kartendaten verglichen, und eine identische räumliche Konstellation in den Kartendaten bestimmt. Dadurch ist eine Feinlokalisierung hinsichtlich der Position und Orientierung im globalen Koordinatensystem der Kartendaten mit einer besonders hohen Positionsgenauigkeit im Zentimeterbereich ermöglicht.

Das erfindungsgemäße Fahrerassistenzsystem ist für einen assistierten Spurwechselvorgang eines Kraftfahrzeugs von einer Ausgangsspur zu einer benachbarten Zielspur vorgesehen sowie dafür geeignet und eingerichtet. Das Fahrerassistenzsystem ist somit insbesondere als ein Spurwechselassistenzsystem ausgeführt. Das Fahrerassistenzsystem weist mindestens einen Umgebungssensor zur Erfassung von Objekten in einer Umgebung des Kraftfahrzeugs, und mindestens eine Karteneinheit zur Erfassung von Kartendaten über den Fahrspurverlauf der Fahrbahn (Spurdaten) auf. Die Karteneinheit und der Umgebungssensor sind mit einem Controller (das heißt einer Steuereinheit) gekoppelt.

Der Controller ist hierbei allgemein - programm- und/oder schaltungstechnisch - zur Durchführung des vorstehend beschriebenen erfindungsgemäßen Verfahrens eingerichtet. Der Controller ist somit konkret dazu eingerichtet, anhand der Kartendaten eine aktuelle Fahrzeugposition zu bestimmen, eine Spurwechselstrecke für einen Spurwechselvorgang zu prognostizieren, ein Wahrscheinlichkeitsmaß zu bestimmen, die Sensitivität des Umgebungssensors in Abhängigkeit des Wahrscheinlichkeitsmaßes einzustellen, die Sensordaten des Umgebungssensors auszuwerten, und den Spurwechselvorgang abzubrechen, wenn ein Objekt in den Sensordaten erfasst wird.

Dadurch ist ein besonders geeignetes Fahrerassistenzsystem realisiert, bei welchem eine reduzierte Anzahl an unplausiblen Spurwechselabbrüchen realisiert ist.

In einer bevorzugten Ausgestaltungsform ist der Controller zumindest im Kern durch einen Mikrocontroller mit einem Prozessor und einem Datenspeicher gebildet, in dem die Funktionalität zur Durchführung des erfindungsgemäßen Verfahrens in Form einer Betriebssoftware (Firmware) programmtechnisch implementiert ist, so dass das Verfahren - gegebenenfalls in Interaktion mit einem Vorrichtungsnutzer - bei Ausführung der Betriebssoftware in dem Mikrocontroller automatisch durchgeführt wird. Der Controller kann im Rahmen der Erfindung alternativ aber auch durch ein nicht-programmierbares elektronisches Bauteil, wie zum Beispiel einem anwendungsspezifischen integrierten Schaltkreis (ASIC) oder durch einem FPGA (Field Programmable Gate Array), gebildet sein, in dem die Funktionalität zur Durchführung des erfindungsgemäßen Verfahrens mit schaltungstechnischen Mitteln implementiert ist.

Das erfindungsgemäße Kraftfahrzeug weist ein vorstehend beschriebenes Fahrerassistenzsystem auf. Dadurch ist ein besonders geeignetes Kraftfahrzeug realisiert.

Ein zusätzlicher oder weiterer Aspekt der Erfindung sieht eine Software, also ein Computerprogrammprodukt, auf einem Medium oder Datenträger zur Durchführung oder Ausführung des vorstehend beschriebenen Verfahrens vor. Dies bedeutet, dass die Software auf einem Datenträger hinterlegt ist, und zur Ausführung des vorstehend beschriebenen Verfahrens vorgesehen, sowie dafür geeignet und ausgestaltet ist. Dadurch ist eine besonders geeignete Software für den Betrieb eines Fahrerassistenzsystems für einen assistierten Spurwechselvorgang eines Kraftfahrzeugs realisiert, mit welcher die Funktionalität zur Durchführung des erfindungsgemäßen Verfahrens programmtechnisch implementiert wird. Die Software ist somit insbesondere eine Betriebssoftware (Firmware), wobei der Datenträger beispielsweise ein Datenspeicher des Controllers ist.

Nachfolgend ist ein Ausführungsbeispiel der Erfindung anhand einer Zeichnung näher erläutert. Darin zeigen in schematischen und vereinfachten Darstellungen:
- Fig. 1: ein Kraftfahrzeug mit einem Fahrerassistenzsystem und mit einer Fahrzeugsensorik,
- Fig. 2: eine dreispurige Fahrbahn mit einem Kraftfahrzeug, welches einen Spurwechselvorgang ausführt,
- Fig. 3: Kartendaten eines Fahrspurverlaufs, und
- Fig. 4: ein Flussdiagramm eines erfindungsgemäßen Verfahrens.

Einander entsprechende Teile und Größen sind in allen Figuren stets mit den gleichen Bezugszeichen versehen.

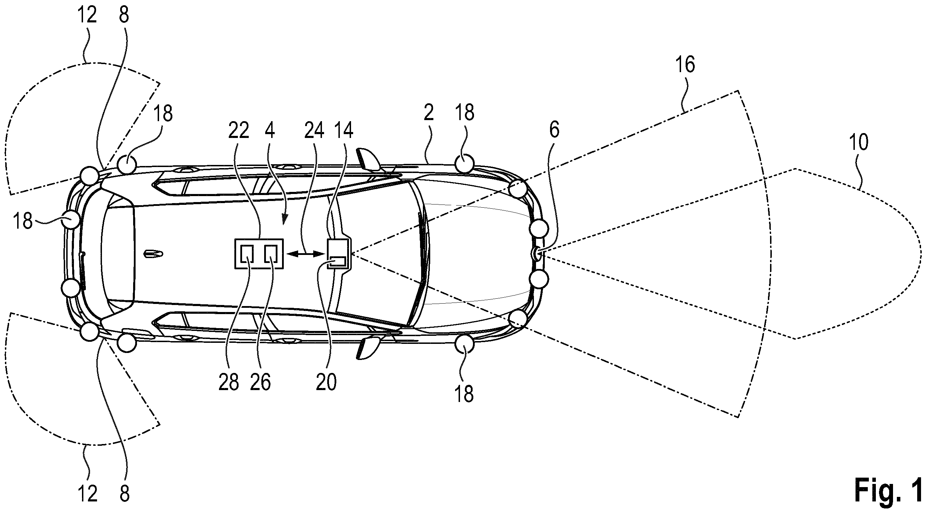

Die Fig. 1 zeigt schematisch ein Kraftfahrzeug 2 mit einem Fahrerassistenzsystem 4. Das Fahrerassistenzsystem 4 weist eine Fahrzeugsensorik auf, mittels welcher die Umgebung des Kraftfahrzeugs 2 überwacht wird.

Die Fahrzeugsensorik weist beispielsweise ein Frontradar 6 und zwei Heckradare 8 auf. In der Figur 1 sind hierbei auch die Radarbereiche 10, 12 des Frontradars 6 und der Heckradare 8 schematisch dargestellt. Die Fahrzeugsensorik weist weiterhin eine Fahrzeugkamera 14 zur optischen Erfassung der frontseitigen Fahrzeugumgebung auf. Der Sensorbereich 16 der Fahrzeugkamera 14 ist in der Fig. 1 strichliniert dargestellt. Zusätzlich weist die Fahrzeugsensorik zwölf Umgebungssensoren 18 auf, wobei jeweils sechs Umgebungssensoren 18 front- und heckseitig angeordnet sind. Die Umgebungssensoren 18 sind insbesondere als Ultraschallsensoren ausgeführt. Die Umgebungs- oder Ultraschallsensoren 18 sind in der Fig. 1 lediglich beispielhaft mit Bezugszeichen versehen.

Die Fahrzeugkamera 14 ist als eine Multifunktionskamera mit einem integrierten Controller 20 ausgeführt. Die Fahrzeugkamera 14 beziehungsweise der Controller 20 ist mit einer Karteneinheit 22 gekoppelt. Die Karteneinheit 22 erfasst Kartendaten 24 über den Fahrspurverlauf einer Fahrbahn und sendet diese an den Controller 20. Unter Kartendaten 24 werden hierbei insbesondere (Fahr-)Spurdaten verstanden.

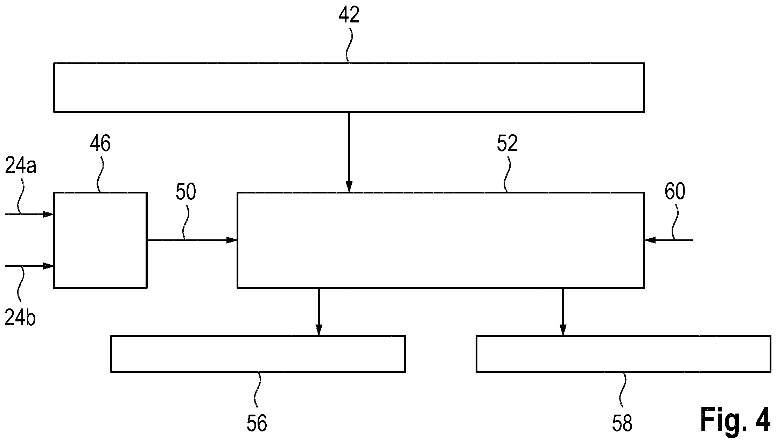

Die Karteneinheit 22 weist hierbei einen Server 26 (In Car Application Server, ICAS) auf, welcher beispielsweise mit einem Navigationsgerät oder einem Navigationssystem des Kraftfahrzeugs 2 gekoppelt ist. Der Server 26 ist weiterhin mit einer Sende- und Empfangseinheit (Online Connectivity Unit, OCU) 28 gekoppelt, mittels welcher Schwarmdaten (Flottendaten) aus einer Datenwolke (Cloud) empfangbar sind. Die Kartendaten 24 sind somit beispielsweise Navigationsdaten 24a (Fig. 4) des Navigationssystems und/oder die aus der Datenwolke empfangenen Schwarmdaten 24b (Fig. 4). Die Schwarmdaten 24b können hierbei beispielsweise ein sogenanntes Roadbook von Mobileye gebildet sein.

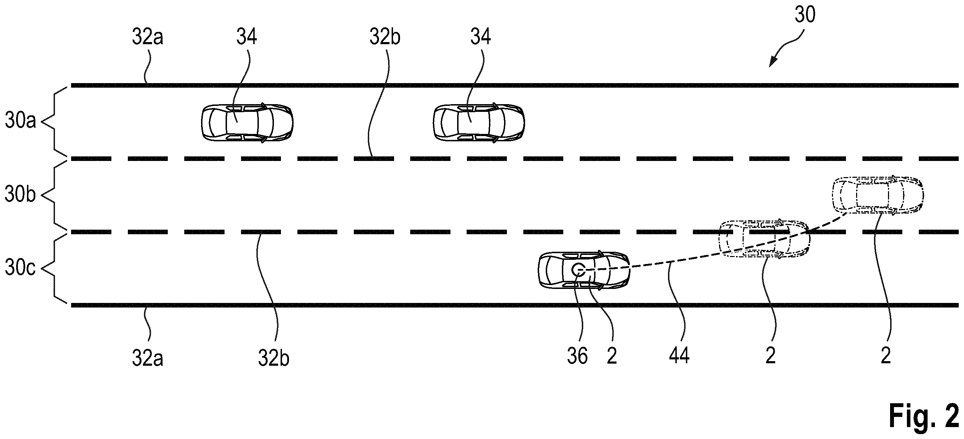

In der Fig. 2 ist eine dreispurige Fahrbahn 30 mit drei benachbarten Fahrspuren 30a, 30b, 30c gezeigt. Die Fahrspur 30a ist hierbei die in Fahrrichtung links orientierte Fahrspur, wobei die Fahrspur 30c die in Fahrrichtung rechts orientierte Fahrspur ist, und wobei die Fahrspur 30b die Mittelspur ist. Die Fahrspuren 30a, 30b, 30c sind durch Straßenlinien 32a, 32b seitlich begrenzt.

Die jeweils äußersten Straßenlinien 32a sind als Fahrbahnbegrenzung ausgeführt, und begrenzen die Fahrspuren 30a und 30c zum jeweiligen Fahrbahnrand, wobei die zwei mittleren Straßenlinien 32b als Leitlinien zwischen den Fahrspuren 30a und 30b beziehungsweise 30b und 30c ausgeführt sind. Auf der Fahrspur 30a sind zwei Verkehrsteilnehmer 34 in Form von Kraftfahrzeugen gezeigt. In der Fig. 2 ist das Kraftfahrzeug 2 zu Beginn und Ende eines Spurwechselvorgangs von der Fahrspur 30c auf die Fahrspur 30b sowie während des Spurwechselmanövers beim Überqueren der Leitlinie 32b gezeigt.

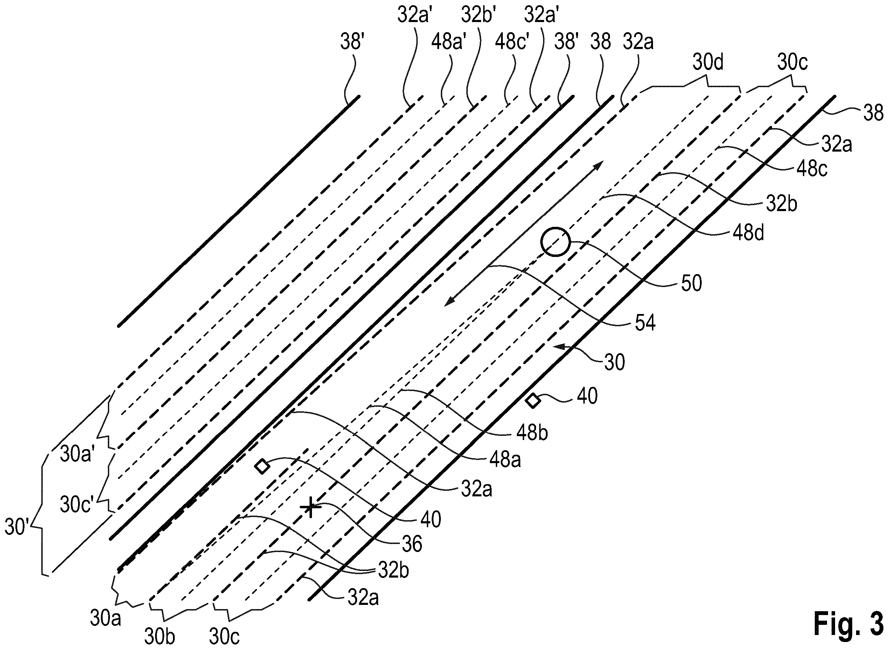

Während des Betriebs des Fahrerassistenzsystems 4 wird anhand der Kartendaten 24 eine aktuelle Fahrzeugposition 36 auf der Fahrbahn 30 bestimmt. Die Fig. 3 zeigt hierbei beispielsweise Kartendaten 24 einer Autobahn mit zwei Fahrbahnen 30, 30`. Die Bezugszeichen für die Fahrbahn 30' in Gegenrichtung entsprechen den für die Fahrbahn 30, wobei die Bezugszeichen für die Fahrbahn 30' mit einem Strich (`) gekennzeichnet sind. Die Fahrbahnen 30, 30' sind durch Begrenzungen 38, 38' der Seitenstreifen, beispielsweise mittels Leitplanken, begrenzt. Die Fahrbahn 30' ist zweispurig, wobei die Fahrbahn 30 in dem dargestellten Bereich der Fig. 3 eine Fahrspurbegrenzung von dreispurig auf zweispurig aufweist, bei welcher die Fahrbahnen 30a und 30b zu einer Fahrbahn 30d vereinigt werden.

Beispielsweise werden hierbei die Kartendaten 24 zur Bestimmung der aktuellen Fahrzeugposition 36 mit den Daten der Fahrzeugkamera 14 verglichen, um eine erhöhte Positionsgenauigkeit zu realisieren. Hierbei werden beispielsweise Live-Features, beispielsweise Schilder 40, durch die Fahrzeugkamera 14 erfasst, und zur Feinlokalisierung mit den Kartendaten 24, also den Navigationsdaten 24a und/oder den Schwarmdaten 24b, verglichen.

Nachfolgend ist anhand der Figuren 4 ein Verfahren zum Betrieb des Fahrerassistenzsystems 4 für einen assistierten Spurwechselvorgang des Kraftfahrzeugs 2 von der Fahrspur 30c auf die Fahrspur 30d im Bereich der Fahrspurreduzierung näher erläutert. Die Fahrspur 30c auf welcher der Spurwechselvorgang beginnt ist nachfolgend auch als Ausgangsspur 30c bezeichnet, wobei die Fahrspur 30d auf welcher der Spurwechselvorgang endet entsprechend als Zielspur 30d bezeichnet ist. Das Verfahren wird insbesondere von dem Controller 22 ausgeführt.

Ein Fahrzeugnutzer (Fahrer) des Kraftfahrzeugs 2 startet in einem Verfahrensschritt 42 den Spurwechselvorgang beispielsweise durch Aktivierung eines Fahrzeugblinkers, insbesondere mittels Tippblinken.

Bei einem aktiven Spurwechselvorgang wird eine Spurwechselstrecke 44 (Fig. 2), also ein Verlauf der Fahrzeugposition 36 für den Spurwechselvorgang, prognostiziert oder geschätzt. Für die prognostizierte Spurwechselstrecke 44 wird anschließend ein Wahrscheinlichkeitsmaß für einen Spurwechsel eines weiteren Verkehrsteilnehmers 34, auf die Zielspur 30d bestimmt.

Das Wahrscheinlichkeitsmaß wird anhand der Kartendaten 24 bestimmt. Als Wahrscheinlichkeitsmaß wird hierbei insbesondere das Vorhandensein einer Fahrspurreduzierung verwendet. Hierzu werden die Kartendaten 24, also die Navigationsdaten 24a und die Schwarmdaten 24b dahingehend ausgewertet, ob eine Fahrspurreduzierung entlang der Spurwechselstrecke 44 vorhanden ist. Es wird also beispielsweise geprüft, ob die Fahrspuren 30a, 30b im Intervall der Spurwechselstrecke 44 zu der Fahrspur 30d vereinigt werden.

Zur Bestimmung oder Lokalisierung einer Fahrspurreduzierung in den Kartendaten 24 werden in einem Verfahrensschritt 46 insbesondere die Schwarmdaten 24b ausgewertet. Die Schwarmdaten umfassen Fahrstreckendaten 48a, 48b, 48c, 48d der beteiligten Schwarmfahrzeuge, welche den (mittleren oder durchschnittlichen) gefahrenen Pfaden der Schwarmfahrzeuge (Drivable Path) auf der Fahrbahn 30 entsprechen. Die Fahrstreckendaten 48a entsprechen hierbei dem mittleren Pfad für die Fahrspur 30a, die Fahrstreckendaten 48b dem Pfad für die Fahrspur 30b, die Fahrstreckendaten 48c dem Pfad für die Fahrspur 30c, und die Fahrstreckendaten 48d dem Pfad für die Fahrspur 30d.

In dem dargestellten Ausführungsbeispiel der Fig. 2 treffen die Fahrstreckendaten 48a und 48b in einem Schnittpunkt 50 aufeinander, und verlaufen von dort als Fahrstreckendaten 48d weiter. Der Schnittpunkt 50 ist somit ein Indikator für eine Fahrspurreduzierung.

Die Position des Schnittpunktes 50 wird in einem Verfahrensschritt 52 als Wahrscheinlichkeitsmaß verwendet. Hierzu wird geprüft ob sich der Schnittpunkt 50 im Bereich der Spurwechselstrecke 44 befindet. Zur Berücksichtigung von Schwankungen und Abweichungen wird hierbei ein um den Schnittpunkt 50 lokalisierter Positionsbereich 54 bestimmt, und geprüft, ob die Spurwechselstrecke 44 sich mit dem Positionsbereich 54 überschneidet. Mit anderen Worten wird in dem Verfahrensschritt 52 geprüft ob sich die (aktuelle oder zukünftige) Fahrzeugposition 36 in dem Positionsbereich 54 befindet.

Der Positionsbereich 54 ist von einer Untergrenze (in Fahrtrichtung hinterster Punkt) und von einer Obergrenze (in Fahrtrichtung vorderster Punkt) begrenzt. Die Untergrenze ist durch eine Differenz des Schnittpunkts 50 mit einem hinterlegten unteren Schwellwert, und die Obergrenze durch eine Summe des Schnittpunkts 50 mit einem hinterlegten oberen Schwellwert bestimmt.

Wenn sich die Fahrzeugposition 36 in dem Positionsbereich 54 befindet (also für die Bedingung Schnittpunkt - unterer Schwellwert < Fahrzeugposition < Schnittpunkt + oberer Schwellwert) dann liegt eine hohe Wahrscheinlichkeit vor, dass andere Verkehrsteilnehmer 34 entlang der Spurwechselstrecke 44 auf die Fahrspur 30d (Zielspur) wechseln. In diesem Falle wird in einem Verfahrensschritt 56 die Sensitivität der Umgebungssensoren 18 auf einen vergleichsweise hohen Sensitivitätswert eingestellt, und die Ultraschallsensorik während der gesamten Spurwechselprozedur, also sowohl in der Ausgangsspur als auch in der Zielspur, ausgewertet.

Gibt es keine Fahrspurreduzierung entlang der Spurwechselstrecke 44, also befindet sich die Fahrzeugposition 36 außerhalb des Positionsbereichs 54, ist die Bedingung nicht erfüllt, und es liegt daher eine lediglich geringe Wahrscheinlichkeit vor, dass andere Verkehrsteilnehmer 34 entlang der Spurwechselstrecke 44 auf die Fahrspur 30d (Zielspur) wechseln. In diesem Falle wird in einem Verfahrensschritt 58 die Sensitivität der Umgebungssensoren 18 auf einen vergleichsweise niedrigen Sensitivitätswert eingestellt, und die Ultraschallsensorik während der gesamten Spurwechselprozedur, also sowohl in der Ausgangsspur als auch in der Zielspur, ausgewertet.

Erfassen die Umgebungssensoren 18 während den Verfahrensschritten 56 oder 58 ein Objekt wird der Spurwechselvorgang abgebrochen.

Der Verfahrensschritt 52 realisiert somit eine gefahrenabhängige Sensitivitätseinstellung der Umgebungssensoren 18. Liegt ein hohes Wahrscheinlichkeitsmaß dafür vor, dass auch andere Verkehrsteilnehmer 34 auf die Zielspur einbiegen, so entspricht dies einer erhöhten Kollisions- oder Unfallgefahr, in diesem Falle werden die Umgebungssensoren 18 mit einer vergleichsweise hohen Sensitivität betrieben und gegebenenfalls unplausible Spurwechselabbrüche in Kauf genommen. Liegt ein niedriges Wahrscheinlichkeitsmaß vor, so entspricht dies einer reduzierten Kollisions- oder Unfallgefahr, so dass in diesem Falle die Umgebungssensoren 18 mit einer mit einer vergleichsweise niedrigen Sensitivität betrieben werden, so dass unplausible Spurwechselabbrüche vermieden oder zumindest reduziert werden.

Optional werden die Sensitivitäten der Umgebungssensoren 18 zusätzlich zu dem Wahrscheinlichkeitsmaß auch in Abhängigkeit einer (aktuellen) Fahrsituation 60 verändert oder angepasst. Insbesondere wird die Sensitivität anhand der aktuellen Fahrzeuggeschwindigkeit und/oder anhand aktueller Wetterdaten eingestellt.

Die beanspruchte Erfindung ist nicht auf die vorstehend beschriebenen Ausführungsbeispiele beschränkt. Vielmehr können auch andere Varianten der Erfindung von dem Fachmann hieraus im Rahmen der offenbarten Ansprüche abgeleitet werden, ohne den Gegenstand der beanspruchten Erfindung zu verlassen. Insbesondere sind ferner alle im Zusammenhang mit den verschiedenen Ausführungsbeispielen beschriebenen Einzelmerkmale im Rahmen der offenbarten Ansprüche auch auf andere Weise kombinierbar, ohne den Gegenstand der beanspruchten Erfindung zu verlassen.

### Bezugszeichenliste

- 2: Kraftfahrzeug
- 4: Fahrerassistenzsystem
- 6: Frontradar
- 8: Heckradar
- 10, 12: Radarbereich
- 14: Fahrzeugkamera
- 16: Sensorbereich
- 18: Umgebungssensor
- 20: Controller
- 22: Karteneinheit
- 24: Kartendaten
- 24a: Navigationsdaten
- 24b: Schwarmdaten
- 26: Server
- 28: Sende-/Empfangseinheit
- 30, 30': Fahrbahn
- 30a, 30b, 30c, 30d, 30a`, 30c`: Fahrspur
- 32a, 32b: Straßenlinien
- 34: Verkehrsteilnehmer
- 36: Fahrzeugposition
- 38, 38': Begrenzung
- 40: Schild
- 42: Verfahrensschritt
- 44: Spurwechselstrecke
- 46: Verfahrensschritt
- 48a, 48b, 48c, 48d, 48a', 48c': Fahrstreckendaten
- 50: Schnittpunkt
- 52: Verfahrensschritt
- 54: Positionsbereich
- 56: Verfahrensschritt
- 58: Verfahrensschritt
- 60: Fahrsituation

## Patentansprüche

1. Verfahren zum Betrieb eines Fahrerassistenzsystems (4) für einen assistierten Spurwechselvorgang eines Kraftfahrzeugs (2) von einer Ausgangsspur (30c) zu einer benachbarten Zielspur (30d), aufweisend mindestens einen Umgebungssensor (18) zur Erfassung von Objekten in einer Umgebung des Kraftfahrzeugs (2), und mindestens eine Karteneinheit (22) zur Erfassung von Kartendaten (24) über den Fahrspurverlauf,
- wobei anhand der Kartendaten (24) eine aktuelle Fahrzeugposition (36) bestimmt wird,
- wobei eine Spurwechselstrecke (44) für einen Spurwechselvorgang prognostiziert wird, wenn ein Spurwechselvorgang aktiviert wird,
- wobei für die Spurwechselstrecke (44) ein Wahrscheinlichkeitsmaß für einen Spurwechsel eines weiteren Verkehrsteilnehmers (34) auf die Zielspur (30d) bestimmt wird,
- wobei in Abhängigkeit des Wahrscheinlichkeitsmaßes eine Sensitivität des Umgebungssensors (18) zur Erkennung von Objekten eingestellt wird,
- wobei die Umgebung während des Spurwechselvorgangs kontinuierlich von dem Umgebungssensor (18) auf das Vorhandensein von Objekten überwacht wird, und
- wobei der Spurwechselvorgang abgebrochen wird, wenn ein Objekt von dem Umgebungssensor (18) erfasst wird.

2. Verfahren nach Anspruch 1,
**dadurch gekennzeichnet,**
**dass** als Kartendaten (24) Navigationsdaten (24a) eines fahrzeuginternen Navigationsgeräts und/oder Schwarmdaten (24b) einer Datenwolke verwendet werden.

3. Verfahren nach Anspruch 1 oder 2,
**dadurch gekennzeichnet,**
**dass** das Wahrscheinlichkeitsmaß anhand der Kartendaten (24) bestimmt wird.

4. Verfahren nach einem der Ansprüche 1 bis 3,
**dadurch gekennzeichnet**,
wobei die Kartendaten (24) zur Bestimmung des Wahrscheinlichkeitsmaßes auf eine bevorstehende Fahrspurreduzierung untersucht werden.

5. Verfahren nach Anspruch 4,
**dadurch gekennzeichnet,**
**dass** die Fahrspurreduzierung anhand eines Schnittpunkts (50) in den Schwarmdaten (24a) lokalisiert wird, wobei für den Vergleich mit der Spurwechselstrecke (44) ein um den Schnittpunkt (50) lokalisierter Positionsbereich (54) verwendet wird.

6. Verfahren nach Anspruch 5,
**dadurch gekennzeichnet,**
**dass** der Positionsbereich (54) von einer Untergrenze und einer Obergrenze begrenzt wird, wobei die Untergrenze durch eine Differenz des Schnittpunkts (50) mit einem hinterlegten unteren Schwellwert, und die Obergrenze durch eine Summe des Schnittpunkts (50) mit einem hinterlegten oberen Schwellwert bestimmt ist.

7. Verfahren nach einem der Ansprüche 1 bis 6,
**dadurch gekennzeichnet,**
**dass** die Sensitivität des Umgebungssensors (18) zusätzlich in Abhängigkeit einer Fahrsituation (60) verändert wird.

8. Verfahren nach Anspruch 7,
**dadurch gekennzeichnet,**
**dass** zur Charakterisierung der Fahrsituation (60) Wetterdaten und/oder eine Fahrzeuggeschwindigkeit des Kraftfahrzeugs (2) ausgewertet werden.

9. Verfahren nach einem der Ansprüche 1 bis 8,
**dadurch gekennzeichnet,**
**dass** zur Bestimmung der aktuellen Fahrzeugposition (36) die Kartendaten (24) mit Daten einer Fahrzeugkamera (14) verglichen werden.

10. Fahrerassistenzsystem (4) für einen assistierten Spurwechselvorgang eines Kraftfahrzeugs (2) von einer Ausgangsspur (30c) zu einer benachbarten Zielspur (30d), aufweisend
- mindestens einen Umgebungssensor (18) zur Erfassung von Objekten in einer Umgebung des Kraftfahrzeugs (2), und
- mindestens eine Karteneinheit (22) zur Erfassung von Kartendaten (24) über den Fahrspurverlauf, sowie
- einen Controller (20) zur Durchführung eines Verfahrens nach einem der Ansprüche 1 bis 9.

11. Kraftfahrzeug (2) mit einem Fahrerassistenzsystem (4) nach Anspruch 10.

12. Software auf einem Datenträger zur Durchführung eines Verfahrens nach einem der Ansprüche 1 bis 9, wenn die Software auf dem Controller eines Fahrerassistenzsystems nach dem Anspruch 10 abläuft.

## Claims

1. Method for operating a driver assistance system (4) for an assisted lane change procedure of a motor vehicle (2) from an initial lane (30c) to an adjacent target lane (30d), comprising at least one environment sensor (18) for detecting objects in an environment of the motor vehicle (2), and at least one map unit (22) for collecting map data (24) about the lane course,
- wherein a current vehicle position (36) is determined based on the map data (24),
- wherein a lane change path (44) for a lane change procedure is predicted when a lane change procedure is activated,
- wherein, for the lane change path (44), a probability magnitude is determined for another road user (34) to change lanes onto the target lane (30d),
- wherein the sensitivity of the environment sensor (18) for identifying objects is adjusted according to the probability magnitude,
- wherein the environment is continuously monitored for the presence of objects by the environment sensor (18) during the lane change procedure, and
- wherein the lane change procedure is aborted if an object is detected by the environment sensor (18).

2. Method according to claim 1,
**characterised in that**
navigation data (24a) of an in-vehicle navigation device and/or swarm data (24b) of a data cloud are used as map data (24).

3. Method according to either claim 1 or claim 2,
**characterised in that**
the probability magnitude is determined based on the map data (24).

4. Method according to any of claims 1 to 3,
**characterised in that**
wherein the map data (24) are examined to determine the probability magnitude for an impending lane reduction.

5. Method according to claim 4,
**characterised in that**
the lane reduction is localized using a point of intersection (50) in the swarm data (24a), a position range (54) localized around the point of intersection (50) being used for the comparison with the lane change path (44).

6. Method according to claim 5,
**characterised in that**
the position range (54) is limited by a lower limit and an upper limit, the lower limit being determined by a difference of the point of intersection (50) with a stored lower threshold value, and the upper limit being determined by a sum of the point of intersection (50) with a stored upper threshold value.

7. Method according to any of claims 1 to 6,
**characterised in that**
the sensitivity of the environment sensor (18) is additionally changed depending on a driving situation (60).

8. Method according to claim 7,
**characterised in that**
to characterize the driving situation (60), weather data and/or a vehicle speed of the motor vehicle (2) are evaluated.

9. Method according to any of claims 1 to 8,
**characterised in that**
to determine the current vehicle position (36), the map data (24) are compared with data from a vehicle camera (14).

10. Driver assistance system (4) for an assisted lane change procedure of a motor vehicle (2) from an initial lane (30c) to an adjacent target lane (30d), comprising
- at least one environment sensor (18) for detecting objects in an environment of the motor vehicle (2), and
- at least one map unit (22) for collecting map data (24) about the lane course, and
- a controller (20) for carrying out a method according to any of claims 1 to 9.

11. Motor vehicle (2) having a driver assistance system (4) according to claim 10.

12. Software on a data carrier for carrying out a method according to any of claims 1 to 9, when the software runs on the controller of a driver assistance system according to claim 10.

## Revendications

1. Procédé de fonctionnement d'un système d'assistance au conducteur (4) pour un processus de changement de voie assisté d'un véhicule automobile (2) d'une voie de départ (30c) à une voie cible (30d) voisine, présentant au moins un capteur d'environnement (18) pour détecter des objets dans un environnement du véhicule automobile (2), et au moins une unité cartographique (22) pour détecter des données cartographiques (24) sur le tracé de voie de circulation,
- dans lequel une position de véhicule (36) actuelle est déterminée à l'aide des données cartographiques (24),
- dans lequel un trajet de changement de voie (44) est prédit pour une opération de changement de voie lorsqu'une opération de changement de voie est activée,
- dans lequel une mesure de probabilité pour un changement de voie d'un autre usager de la route (34) vers la voie cible (30d) est déterminée pour le trajet de changement de voie (44),
- dans lequel une sensibilité du capteur d'environnement (18) pour la reconnaissance d'objets est réglée en fonction de la mesure de probabilité,
- dans lequel l'environnement est surveillé en continu par le capteur d'environnement (18) pour détecter la présence d'objets pendant le processus de changement de voie, et
- dans lequel l'opération de changement de voie est interrompue lorsqu'un objet est détecté par le capteur d'environnement (18).

2. Procédé selon la revendication 1,
**caractérisé en ce**
**que** des données de navigation (24a) d'un appareil de navigation interne au véhicule et/ou des données de nuée (24b) d'un nuage de données sont utilisées comme données cartographiques (24).

3. Procédé selon la revendication 1 ou 2,
**caractérisé en ce**
**que** la mesure de probabilité est déterminée à l'aide des données cartographiques (24).

4. Procédé selon l'une des revendications 1 à 3,
**caractérisé en ce**
dans lequel les données cartographiques (24) sont examinées pour déterminer la mesure de probabilité d'une réduction de voie de circulation imminente.

5. Procédé selon la revendication 4,
**caractérisé en ce**
**que** la réduction de voie de circulation est localisée à l'aide d'un point d'intersection (50) dans les données de nuée (24a), dans lequel une zone de position (54) localisée autour du point d'intersection (50) est utilisée pour la comparaison avec le trajet de changement de voie (44).

6. Procédé selon la revendication 5,
**caractérisé en ce**
**que** la plage de position (54) est délimitée par une limite inférieure et une limite supérieure, dans lequel la limite inférieure est déterminée par une différence du point d'intersection (50) avec une valeur seuil inférieure mémorisée, et la limite supérieure par une somme du point d'intersection (50) avec une valeur seuil supérieure mémorisée.

7. Procédé selon l'une des revendications 1 à 6,
**caractérisé en ce**
**que** la sensibilité du capteur d'environnement (18) est en outre modifiée en fonction d'une situation de conduite (60).

8. Procédé selon la revendication 7,
**caractérisé en ce**
**que,** pour caractériser la situation de conduite (60), des données météorologiques et/ou une vitesse de véhicule du véhicule automobile (2) sont évaluées.

9. Procédé selon l'une des revendications 1 à 8,
**caractérisé en ce**
**que,** pour déterminer la position de véhicule (36) actuelle, les données cartographiques (24) sont comparées à des données d'une caméra de véhicule (14).

10. Système d'assistance au conducteur (4) pour une opération de changement de voie assistée d'un véhicule automobile (2) d'une voie de départ (30c) à une voie cible (30d) voisine, présentant
- au moins un capteur d'environnement (18) pour détecter des objets dans un environnement du véhicule automobile (2), et
- au moins une unité cartographique (22) pour détecter des données cartographiques (24) sur le tracé de voie de circulation, ainsi que
- un dispositif de commande (20) pour la réalisation d'un procédé selon l'une des revendications 1 à 9.

11. Véhicule automobile (2) comportant un système d'assistance au conducteur (4) selon la revendication 10.

12. Logiciel sur un support de données pour la réalisation d'un procédé selon l'une des revendications 1 à 9, lorsque le logiciel s'exécute sur le dispositif de commande d'un système d'assistance au conducteur selon la revendication 10.
